Europäisches Patentamt

**European Patent Office**

Office européen des brevets

(19)

(11) Publication number: **0 224 988**
**B1**

(12)

# EUROPEAN PATENT SPECIFICATION

(45) Date of publication of the patent specification:
06.12.89

(51) Int. Cl.⁴: **F16D 65/02,** F16D 65/84,
F16D 55/224, F16D 65/16

(21) Application number: 86306098.4

(22) Date of filing: 07.08.86

(54) Disc brake shoe assemblies.

(30) Priority: 03.09.85 US 772029

(43) Date of publication of application:
10.06.87 Bulletin 87/24

(45) Publication of the grant of the patent:
06.12.89 Bulletin 89/49

(84) Designated Contracting States:
DE FR GB

(56) References cited:
DE-A- 2 755 325
GB-A- 2 022 733
US-A- 3 885 651

(73) Proprietor: GENERAL MOTORS CORPORATION,
General Motors Building 3044 West Grand Boulevard,
Detroit Michigan 48202(US)

(72) Inventor: Myers, William Keith, 241 Walnut Grove Drive,
Centerville Ohio 45459(US)

(74) Representative: Denton, Michael John et al, Patent
Section - Luton Office (F6) Vauxhall Motors Limited P.O.
Box 3 Kimpton Road, Luton Bedfordshire LU2 0SY(GB)

## Description

The invention relates to disc brake shoe assemblies.

The invention is more particularly concerned with disc brake shoe assemblies having an insulator secured to one side of an inboard disc brake shoe and arranged to have the annular end of a disc brake piston, or portions or the caliper housing in the case of an outboard shoe, engaging the insulator to act on the brake shoe for brake actuation, for example as disclosed in US-A 3 885 651 and GB-A 2 022 733.

A difficulty which occurs with disc brake shoe assemblies of this kind is that a discontinuity in deformation of the insulator tends to be caused by reason or the piston or the caliper housing causing high-pressure loading of the insulator, so that the unloaded portions of the insulator may not remain secured to the backing plate.

The present invention is concerned with a disc brake shoe assembly having the potential to avoid this difficulty.

To this end, a disc brake shoe assembly in accordance with the present invention is characterised over GB-A 2 022 733 by the features specified in the characterising portion of claim 1.

In a disc brake shoe assembly in accordance with the present invention, therefore, the high-pressure loading of the annular surface of the piston which engages the shoe through the insulator is prevented from deforming the insulator by the provision of one or more slots formed through the insulator immediately adjacent to but laterally outwardly from the high-pressure load area or the insulator. Such slot or slots provide a discontinuity in the deformation of the insulator which may result from the high pressure load exerted on the insulator by the piston during brake actuation, and this discontinuity permits the unloaded areas of the insulator to remain firmly secured to the backing plate and therefore to be fully effective in providing the required insulating action.

The invention is applicable to outboard shoes engaged by the outboard leg of a sliding caliper housing; however, the detailed description which follows is specifically concerned with the inboard shoe and piston construction. Overall, and within the scope of the claims, the invention is applicable to all shoes and insulators subject to high-pressure loading, and therefore references in certain claims hereof to disc brake actuating members may refer to either an actuating piston or a caliper leg, as shown in the drawing.

It is well known to use heat and/or noise insulators between a disc brake piston and the backing plate of a disc brake shoe assembly. Insulators which are formed of layers of steel and adhesive have been found to be particularly effective for noise insulation purposes. Such insulators are formed as sheets which are cut to the same shape as that of the backing plate and are secured to the backing plate by rivets or adhesive, or both. If for any reason an area of the insulator becomes detached from the backing plate, the insulating action of the insulator is lessened. One of the causes of such detachment has been found to be deformation of the insulator at the high-pressure load area where the piston engages the insulator and transmits relatively high forces therethrough during brake actuation.

the provision of one or more discontinuity-forming slots through the insulator immediately adjacent the high-pressure area, in conformity with the present invention, the buckling and detachment effects of any such deformation can be substantially eliminated so that the unloaded portions of the insulator may remain secured to the backing plate even though the high-pressure area portions of the insulator are deformed.

The slots providing such discontinuity may conform to the shape of the high-pressure area and be positioned immediately adjacent thereto, or may have other shapes which substantially conform to such shape. For example, the disc brake piston is commonly circular, with an annular end engaging the insulator, and therefore with this configuration the slots forming the discontinuity could usefully be correspondingly arcuate.

In some constructions the slots may be formed as one or more straight-line slots positioned in a tangent-like fashion but spaced slightly radially from the high-pressure area. When the insulator is secured to the backing plate by means of rivets, the discontinuity slots may terminate before they intersect the insulator openings through which the rivets pass, or in other instances the slots may intersect such openings so that the slots and the rivet openings are formed in the insulator as in effect a common opening.

The slots may be formed as cuts or lances, or they may be formed with the removal of a small amount of material. It is desirable to form the slots with enlarged ends, particularly if the slots are formed as cuts or lances, so as to relieve the stress at the ends of the slots and therefore prevent the slots from opening further than desired.

The slots may be positioned radially outwardly of the high-pressure area, and slots may also be provided radially inwardly thereof to protect the portion of the insulator which is positioned radially inwardly of the high-pressure area.

In the drawing:

Figure I is a fragmentary cross-sectional view, with parts broken away, of a disc brake assembly having disc brake shoe assemblies provided with insulators in conformity with the invention;

Figure 2 is a fragmentary enlarged view in the direction of arrows 2--2 of Figure I, showing in elevation an inboard portion of the disc brake assembly together with an insulator in conformity with the invention, with parts broken away;

Figure 3 is a fragmentary sectional view in the direction of arrows 3--3 of Figure 2, showing the disc brake shoe assembly having the embodiment of the invention illustrated in Figure 2;

Figure 4 is a fragmentary view similar to Figure 2 but illustrating a second embodiment of the invention; and

Figure 5 is another fragmentary view similar to Figure 2, but illustrating a third embodiment of the invention.

With reference now to the drawing, a disc brake assembly l0 includes a caliper l2 having legs l4 and l6 joined by a bridge section l8. The caliper extends over a rotary disc 20 to be braked. The caliper leg l6 has a cylinder 22 formed therein in which a disc brake piston 24 is reciprocably received. The piston 24 is illustrated as being the usual cup-shaped piston having an annular end 26 opening towards the disc 20. An outboard brake shoe assembly 28 is secured to the caliper leg l4 so as to be frictionally engageable with one side of the disc 20. The assembly 28 includes a sheet-like insulator 29 secured to a backing plate and engaged under high-pressure loading by portions of the caliper leg l4 when the brake assembly is actuated. The inboard brake shoe assembly 30 is positioned between the annular end 26 of the piston 24 and the other side of the disc 20 so as to be movable by the piston into friction engagement with the disc 20 when the brake is actuated.

Further description of the invention relates to the inboard brake shoe assembly 30, but the inventive concept is likewise applicable to the outboard shoe assembly 28.

The inboard brake shoe assembly 30 includes a backing plate 32, with a friction pad 34 being secured to one side 36 of the backing plate. The other side 38 of the backing plate has a sheet-like insulator 40 secured thereto. The insulator 40 may be secured by adhesive, or by the use of rivets such as integral rivets 42, or both. The insulator 40 may be a noise insulator, or a heat insulator, or both: it preferably covers substantially the entire side 38 of the backing plate 32.

In the form of a noise insulator, the insulator 40 is preferably constructed of multiple layers, layers 44 and 46 being made of sheets of steel joined together by an adhesive layer 48, which is preferably of a visco-elastic material.

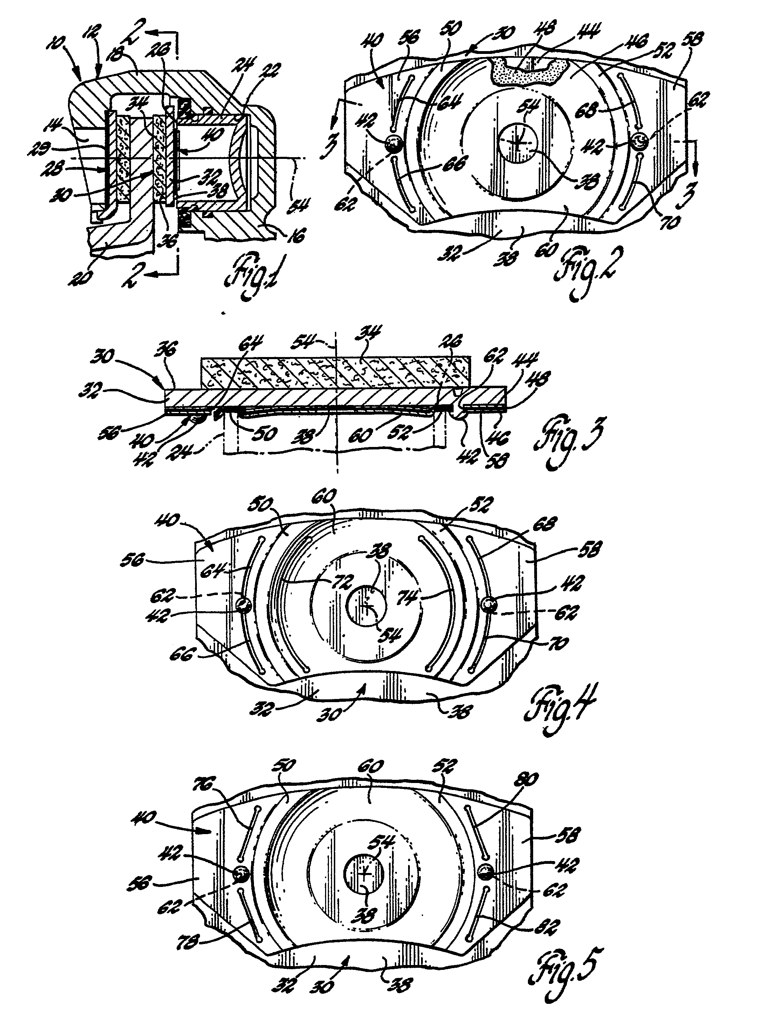

Details of the construction of the inboard shoe assembly 30 are better illustrated in Figure 3.

The annular end 26 of the piston normally engages the brake shoe assembly 30 at two arcuate high-pressure areas of piston engagement 50 and 52 which are radially opposite each other relative to the piston axis 54. The high-pressure areas 50 and 52 are shown in Figures 2 to 5, from which it will be evident that the total area of the two high-pressure areas 50 and 52, which is the portion of the shoe assembly 30 actually engaged by the annular end 26 of the piston, is relatively small in relation to the total area of the insulator 40. The inboard brake shoe assembly 30, and therefore the insulator 40, is divided by the high-pressure areas 50 and 52 so that there are radially outward portions 56 and 58 of the total area of the insulator 40 which are respectively radially outward, and therefore laterally outward, of the high-pressure areas 50 and 52.

The insulator 40 also has a radially inner portion 60 which is positioned radially inwardly of the arcuate high-pressure areas 50 and 52. Thus the high-pressure areas 50 and 52 are clearly limited in surface area relative to the other area portions 56, 58 and 60 of the insulator.

When the insulator 40 is secured to the backing plate 32 by means of rivets 42, the insulator is provided with openings 62 through which the rivets 42 extend. These openings are positioned radially outwardly of the high-pressure arcuate areas 50 and 52 so that the rivet heads are also positioned outwardly of the area of contact of the annular end 26 of the piston with the insulator 40.

It has been found that over a period of time, the many brake actuations involved, particularly heavy brake actuations, may cause some deformation of the insulator 40 in the immediate vicinity of the high-pressure areas 50 and 52 of piston engagement. Such deformation is illustrated in Figure 3, with the portion of the radially inner portion 60 of the insulator immediately adjacent the high-pressure areas 50 and 52 being illustrated as having been deformed, the deformation being shown in an exaggerated style for clarity and emphasis. It has been found particularly desirable to keep the insulator 40 secured to the side 38 of the backing plate in surface engagement therewith at all times so that the insulator may perform with maximum efficiency. In order to do this, it is therefore necessary to prevent deformation of adjacent areas, and particularly any buckling and consequent separation of the insulator from the backing plate caused by such deformation.

Therefore, in conformity with the invention, cuts or slots are formed through the insulator immediately adjacent the high-pressure areas 50 and 52, the cuts or slots providing deformation discontinuity in the insulator and therefore permitting the portions of the insulator beyond the cuts or slots to remain secured to the backing plate because those portions are not subjected to buckling or other deformation caused by high-pressure loading of the piston.

As is more particularly shown in Figures 2 and 3, slots 64 and 66 as aforesaid are provided laterally outwardly from the high-pressure area 50 but immediately adjacent that area, and are also positioned on either side of the opening 62 in the insulator through which one of the rivets 42 extends. Similar slots 68 and 70 are provided laterally outwardly of the high-pressure area 52. The slots are formed in the laterally outward portions 56 and 58 of the insulator 40.

The slots 64, 66, 68 and 70 are illustrated as having closed ends so that they are spaced from the openings 62 receiving the rivets 42, and they are also spaced inwardly from the outer edges of the insulator 40. The slots are preferably provided with stress-relieved ends, illustrated as being slightly enlarged slot portions having a circular conformation. This is particularly important if the slots are formed as lances or cuts through the insulator rather than being formed by removal of material. The arcuate slots of Figures 2 and 3 are illustrated as being concentrically outwardly of the high-pressure areas 50 and 52, with the slot arc also being based on the axis 54.

As can be seen in Figure 3, the high-pressure areas 50 and 52 may cause deformation or buckling of the immediately adjacent portions of the insulator, with separation of the insulator from engagement with the side 38 of the backing plate. By providing the slots as a deformation discontinuity, the outer portions 56 and 58 of the insulator 40 are not adversely affected by the deformation or buckling, and remain tightly secured to the surface 38 of the backing plate 32

Figure 4 shows a slot arrangement in which slots 72 and 74 are also provided in the radially inner portion 60 of the insulator, radially inwardly of the high-pressure areas 50 and 52. These slots, constructed similarly to the outer slots, therefore provide deformation discontinuity for the radially inner portion 60 and minimise buckling and separation of the insulator from the backing plate in the area covered by the inner portion 60.

Inner slots corresponding to the slots 72 and 74 may likewise be provided in any other of the embodiments illustrated.

Figure 4 also shows a modification of the slots 64, 66, 68 and 70 whereby the inner ends of the slots extend into the openings 62.

The arrangement shown in Figure 5 has slots 76, 78, 80 and 82 formed in the insulator which are similar to the slots 64, 66, 68 and 70. However, the slots of Figure 5 are illustrated as being straight-line slots which are positioned radially outwardly of the high-pressure areas 50 and 52 but in a tangent-like spaced arrangement relative to the arc of the outer side of those areas.

In all instances, it is preferable that the cuts or slots extend entirely through the insulator 40 from one side thereof engaged by the annular end of the piston to the other side thereof secured to the side 38 of the brake shoe.

In some instances only a single slot may be provided in place of the two slots per side illustrated in Figures 2 and 5.

## Claims

1. A disc brake shoe assembly having a backing plate (32), a friction pad (34) secured to one side (36) of the backing plate (32), and an insulator sheet (40) secured to the other side (38) of the backing plate (32), the insulator sheet (40) having a high-pressure area (50, 52) of disc brake actuating member contact subject to high pressure loading during brake actuation, with a portion (56, 58) of the insulator sheet (40) positioned laterally from the high-pressure area (50, 52) and subject to no direct pressure loading from the disc brake actuating member during brake actuation, arrangement being provided for preventing deformation of the insulator sheet (40) resulting from high-pressure loading or the high-pressure area (50, 52) by the disc brake actuating member during brake actuation and consequent buckling and detachment of at least a portion of the insulator sheet (40) from the backing plate (32) with resulting decreased insulating capability of the insulator sheet (40), the arrangement comprising at least one slot (64, 66, 68, 70) that is formed through the insulator sheet (40) immediately adjacent to but laterally spaced from the high-pressure area (50, 52) and is effective to provide a discontinuity in the deformation or the insulator sheet (40) resulting from high-pressure loading and permitting the laterally-positioned portion of the insulator sheet (40) to remain secured to the backing plate (32), characterised in that the laterally-positioned portion (56, 58) or the insulator sheet (40) is positioned laterally outwardly from the high-pressure area (50, 52), the said at least one slot (64, 66, 68, 70) is formed through the insulator sheet (40) laterally outwardly or the high-pressure area (50, 52), and the said at least one slot (64, 66, 68, 70) is closed at the ends thereof.

2. A disc brake shoe assembly according to claim 1, characterised in that the assembly is in the form or an inboard disc brake shoe assembly (30) that is subject to the action of a disc brake piston (24) which constitutes the disc brake actuating member.

3. A disc brake shoe assembly according to claim 1, characterised in that the assembly is in the form of an outboard disc brake shoe assembly (28) that is subject to the action or a disc brake caliper (12) constituting the disc brake actuating member.

4. A disc brake shoe assembly according to any one of claims 1 to 3, characterised in that the high-pressure area (50, 52) of the insulator sheet (40) comprises a limited surface area of the insulator sheet (40).

5. A disc brake shoe assembly according to claim 4, characterised in that the insulator sheet (40) substantially covers the said other side (38) or the backing plate (32).

6. A disc brake shoe assembly according to any one of claims 1 to 5, characterised in that the high-pressure area (50, 52) includes at least one circumferentially extending arcuate section, and in that the laterally positioned portion includes a first portion (60) or the insulator sheet (40) radially within the said at least one circumferentially extending arcuate section and at least a second portion (56, 58) of the insulator sheet (40) radially outwardly of the said at least one circumferentially extending arcuate section, and the said at least one slot (64, 66, 68, 70) is formed in the said at least second portion of the insulator sheet (40), the said at least one slot (64, 66, 68, 70) being disposed adjacent to the said at least one circumferentially extending arcuate section of the high-pressure area (50, 52) and providing a deformation discontinuity as aforesaid between the high-pressure area (50, 52) and substantially the whole of the said at least second portion of the insulator sheet (40) laterally outwardly from high-pressure area (50, 52).

7. A disc brake shoe assembly according to claim 6, characterised in that the said at least one slot (64, 66, 68, 70) is arcuate.

8. A disc brake shoe assembly according to claim 6, characterised in that the said at least one slot comprises a straight-line slot (76, 78, 80, 82).

9. A disc brake shoe assembly according to any one of claims 1 to 8, characterised in that the said at least one slot (64, 66, 68, 70) comprises a plurality of slot sections.

10. A disc brake shoe assembly according to claim 6, characterised in that the high-pressure area (50, 52) is composed of two arcuate sections, the second portion or the insulator sheet (40) is composed of two oppositely positioned sections (56, 58) of insulator sheet (40), and the said at least one slot (64, 66, 68, 70) comprises one or more slots in each of the two oppositely positioned sections of the insulator sheet (40).

11. A disc brake shoe assembly according to any one of claims 1 to 10, characterised in that the insulator sheet (40) is a noise insulator made of multiple layers including a first layer (44) or steel bonded to a second layer of steel (46) by means of a viscoelastic adhesive (48).

**Patentansprüche**

1. Scheibenbremsklotzanordnung mit einer Stützplatte (32), einem an einer Seite (36) der Stützplatte (32) befestigten Reibkissen (34) und einer an der anderen Seite (38) der Stützplatte (32) befestigten Isolatorschicht (40) mit einem Hochdruckbereich (50, 52) des Kontakts mit dem Scheibenbremsen-Betätigungsglied, der bei Bremsbetätigung hoher Druckbelastung unterworfen ist, wobei ein Abschnitt (56, 58) der Isolatorschicht (40) seitwärts von dem Hochdruckbereich (50, 52) angeordnet und während Bremsbetätigung keiner direkten Druckbelastung von dem Scheibenbremsen-Betätigungsglied unterworfen ist, wobei Anordnung getroffen ist, eine von hoher Druckbelastung des Hochdruckbereiches (50, 52) durch das Scheibenbremsen-Betätigungsglied während Bremsbetätigung herrührende Verformung der Isolatorschicht (40) und sich daraus ergebende Verwerfung und Ablösung von mindestens einem Abschnitt der Isolatorschicht (40) von der Stützplatte (32) mit davon herrührender verringerter Isolationsfähigkeit der Isolatorschicht (40) zu verhindern, die Anordnung mindestens einen Schlitz (64, 66, 68, 70) umfaßt, der durch die Isolatorschicht (40) unmittelbar benachbart, jedoch mit seitlichem Abstand zum Hochdruckbereich (50, 52) ausgebildet und wirksam ist, eine Diskontinuität bei der durch hohe Druckbelastung erzeugten Verformung der Isolatorschicht (40) zu schaffen und den seitwärts versetzt angeordneten Anteil der Isolatorschicht (40) sicher an der Stützplatte (32) befestigt zu lassen, dadurch gekennzeichnet, daß der seitwärts versetzt angeordnete Abschnitt (56, 58) der Isolatorschicht (40) seitwärts nach außen von dem Hochdruckbereich (50, 52) angeordnet ist, daß der mindestens eine Schlitz (64, 66, 68, 70) durch die Isolatorschicht (40) seitwärts außerhalb des Hochdruckbereiches (50, 52) ausgebildet ist, und daß der mindestens eine Schlitz (64, 66, 68, 70) an seinen Enden geschlossen ist.

2. Scheibenbremsklotzanordnung nach Anspruch 1, dadurch gekennzeichnet, daß die Anordnung in Form einer inneren Scheibenbremsklotzanordnung (30) vorhanden ist, die der Einwirkung eines Scheibenbremskolbens (24) unterworfen ist, welcher das Scheibenbremsen-Betätigungsglied bildet.

3. Scheibenbremsklotzanordnung nach Anspruch 1, dadurch gekennzeichnet, daß die Anordnung in Form einer äußeren Scheibenbremsklotzanordnung (28) vorhanden ist, die der Einwirkung einer Scheibenbremszange (12) unterworfen ist, welche das Scheibenbremsen-Betätigungsglied bildet.

4. Scheibenbremsklotzanordnung nach einem der Ansprüche 1 bis 3, dadurch gekennzeichnet, daß der Hochdruckbereich (50, 52) der Isolatorschicht (40) einen begrenzten Flächenbereich der Isolatorschicht (40) umfaßt.

5. Scheibenbremsklotzanordnung nach Anspruch 4, dadurch gekennzeichnet, daß die Isolatorschicht (40) im wesentlichen die andere Seite (38) der Stützplatte (32) bedeckt.

6. Scheibenbremsklotzanordnung nach einem der Ansprüche 1 bis 5, dadurch gekennzeichnet, daß der Hochdruckbereich (50, 52) mindestens eine sich in Umfangsrichtung erstreckende Bogensektion enthält und daß der seitwärts versetzt angeordnete Abschnitt einen ersten Abschnitt (60) der Isolatorschicht (40) radial innerhalb der mindestens einen sich in Umfangsrichtung erstreckenden Bogensektion enthält und mindestens einen zweiten Abschnitt (56, 58) der Isolatorschicht (40) radial außerhalb der mindestens einen sich in Umfangsrichtung erstreckenden Bogensektion, und daß der mindestens eine Schlitz (64, 66, 68, 70) in dem mindestens zweiten Abschnitt der Isolatorschicht (40) ausgebildet ist, wobei der mindestens eine Schlitz (64, 66, 68, 70) benachbart zu der mindestens einen sich in Umfangsrichtung erstreckenden Bogensektion des Hochdruckbereiches (50, 52) angeordnet ist und eine Verformungs-Diskontinuität der genannten Art zwischen dem Hochdruckbereich (50, 52) und im wesentlichen der Gesamtheit des mindestens zweiten Abschnitts der Isolatorschicht (40) seitwärts außerhalb des Hochdruckbereiches (50, 52) schafft.

7. Scheibenbremsklotzanordnung nach Anspruch 6, dadurch gekennzeichnet, daß der mindestens eine Schlitz (64, 66, 68, 70) bogenförmig verläuft.

8. Scheibenbremsklotzanordnung nach Anspruch 6, dadurch gekennzeichnet, daß der mindestens eine Schlitz einen geradlinigen Schlitz (76, 78, 80, 82) umfaßt.

9. Scheibenbremsklotzanordnung nach einem der Ansprüche 1 bis 8, dadurch gekennzeichnet, daß der mindestens eine Schlitz (64, 66, 68, 70) eine Vielzahl von Schlitz-Sektionen enthält.

10. Scheibenbremsklotzanordnung nach Anspruch 6, dadurch gekennzeichnet, daß der Hochdruckbereich (50, 52) aus zwei Bogensektionen zusammengesetzt ist, wobei der zweite Abschnitt der Isolatorschicht (40) aus zwei einander gegenüberliegenden Sektionen (56, 58) der Isolatorschicht (40) zusammengesetzt ist und der mindestens eine Schlitz (64, 66, 68, 70) einen oder mehrere Schlitze in jeder der zwei einander gegenüberliegend angeordneten Sektionen der Isolatorschicht (40) umfaßt.

11. Scheibenbremsklotzanordnung nach einem der Ansprüche 1 bis 10, dadurch gekennzeichnet, daß die Isolatorschicht ein Geräusch-Isolator aus Mehrfachschichten ist, einschließlich einer ersten Schicht (44) aus Stahl, die mit einer zweiten Schicht (46) aus Stahl mittels eines viskoelastischen Klebers (48) verbunden ist.

## Revendications

1. Ensemble de patin de frein à disque comportant une plaque de support (32), un patin de friction (34) fixé sur une face (36) de la plaque de support (32), et une feuille d'isolateur (40) fixée sur l'autre face (38) de la plaque de support (32), la feuille d'isolateur (40) ayant une région (50, 52) à pression élevée de contact avec l'organe d'actionnement du frein à disque, qui est soumise à une charge à pression élevée lors de l'actionnement du frein, une partie (56, 58) de la feuille d'isolateur (40) située latéralement par rapport aux régions (50, 52) à pression élevée n'étant pas soumise à une charge de pression directe par l'organe d'actionnement du frein lors d'un serrage du frein, un agencement étant prévu pour empêcher une déformation de la feuille d'isolateur (40), due à l'application d'une charge de pression élevée des régions (50, 52) à pression élevée par l'organe d'actionnement du frein à disque pendant un serrage du frein et un gondolement et une séparation consécutifs d'au moins une partie de la feuille d'isolateur (40) de la plaque de support (32) avec une capacité d'isolation diminuée de la feuille d'isolateur (40) qui en résulte, l'agencement comprenant au moins une fente (64, 66, 68, 70) qui est formée à travers la feuille d'isolateur (40) au voisinage immédiat de la région (50, 52) à pression élevée mais espacée latéralement de cette région, et qui réalise une discontinuité dans la déformation de la feuille d'isolateur (40), due à une charge de pression élevée et permettant à la partie située latéralement de l'isolateur (40) de rester fixée sur la plaque de support (32), caractérisé en ce que la partie (56, 58) de la feuille d'isolateur (40) qui est située latéralement est située latéralement à l'extérieur de la région (50, 52) à pression élevée, ladite fente (64, 66, 68, 70) étant formée à travers la feuille d'isolateur (40) latéralement à l'extérieur de la région (50, 52) à pression élevée, et ladite fente (64, 66, 68, 70) étant fermée à ses extrémités.

2. Ensemble de patin de frein à disque suivant la revendication 1, caractérisé en ce qu'il est constitué par un ensemble interne (30) de patin de frein à disque qui est soumis à l'action d'un piston (24) de frein à disque qui constitue l'organe d'actionnement du frein à disque.

3. Ensemble de patin de frein à disque suivant la revendication 1, caractérisé en ce qu'il est est constitué par un ensemble externe (28) de patin de frein à disque qui est soumis à l'action d'un étrier (12) de frein à disque qui constitue l'organe d'actionnement du frein à disque.

4. Ensemble de patin de frein à disque suivant l'une quelconque des revendications 1 à 3, caractérisé en ce que la région (50, 52) à pression élevée de la feuille d'isolateur (40) est constituée par une surface limitée de ladite feuille (40).

5. Ensemble de patin de frein à disque suivant la revendication 4, caractérisé en ce que la feuille d'isolateur (40) recouvre à peu près ladite autre face (38) de la plaque de support (32).

6. Ensemble de patin de frein à disque suivant l'une quelconque des revendications 1 à 5, caractérisée en ce que la région (50, 52) à pression élevée comprend au moins une section incurvée s'étendant circonférentiellement, et en ce que la partie disposée latéralement comprend une première partie (60) de la feuille d'isolateur (40) située radialement à l'intérieur de ladite section incurvée s'étendant circonférentiellement et au moins une seconde partie (56, 58) de la feuille (40) d'isolateur située radialement à l'extérieur de ladite section incurvée s'étendant circonférentiellement, et ladite fente (64, 66, 68, 70), étant formée dans ladite seconde partie de la feuille d'isolateur (40), ladite fente (64, 66, 68, 70) étant adjacente à ladite section incur vée s'étendant circonférentiellement de la région (50, 52) à pression élevée et réalisant une discontinuité de déformation, comme indiqué plus haut, entre la région (50, 52) à pression élevée et à peu près la totalité de ladite seconde partie de la feuille d'isolateur (40) si tuée latéralement à l'extérieur de la région (50, 52) de pression élevée.

7. Ensemble de patin de frein à disque suivant la revendication 6, caractérisé en ce que ladite fente, (64, 66, 68, 70) est incurvée.

8. Ensemble de patin de frein à disque suivant la revendication 6, caractérisé en ce que ladite rente comprend une fente rectiligne (76, 78, 80, 82).

9. Ensemble de patin de frein à disque suivant l'une quelconque des revendications 1 à 8, caractérisé en ce que ladite fente, (64, 66, 68, 70) est constituée par plusieurs sections de fente.

10. Ensemble de patin de frein à disque suivant la revendication 6, caractérisé en ce que la région (50, 52) à pression élevée est formée de deux sections incurvées, la seconde partie de la feuille d'isolateur (40) étant composée de deux sections (56, 58) de la feuille d'isolateur (40) qui sont disposées en opposition, et ladite fente (64, 66, 68, 70) comprend une ou plusieurs fentes situées dans chacune des deux sections de la feuille d'isolateur (40) qui sont disposées en opposition.

11. Ensemble de patin de frein à disque suivant l'une quelconque des revendications 1 à 10, caractérisé en ce que la feuille d'isolateur (40) est un isolateur de bruit fait de plusieurs couches comprenant une première couche (44) d'acier liée à une seconde couche d'acier (46) au moyen d'un adhésif viscoélastique (48).

Fig.1

Fig.2

Fig.3

Fig.4

Fig.5